# EUROPÄISCHE PATENTSCHRIFT

(11) **EP 2 541 038 B1**
(45) Veröffentlichungstag und Bekanntmachung des Hinweises auf die Patenterteilung: **12.04.2017**
(21) Anmeldenummer: 12171504.9
(22) Anmeldetag: 11.06.2012
(51) Int. Cl.: F02M 51/00, F02M 61/16, F02M 51/06, B29C 45/14

(54) **Komponente eines Brennstoffeinspritzsystems**
Component of a fuel injection system
Composant d'un système à injection de carburant

(30) Priorität: 30.06.2011 DE 102011078423
(43) Veröffentlichungstag der Anmeldung: 02.01.2013
(73) Patentinhaber: ROBERT BOSCH GMBH, 70442 Stuttgart (DE)
(72) Erfinder: Erinkurt, Buelent, 71701 Schwieberdingen (DE)

(56) Entgegenhaltungen:
- EP-A1- 1 574 702
- EP-A2- 1 420 467
- DE-A1- 10 059 177
- DE-A1-102005 008 038
- DE-A1-102007 009 963
- DE-A1-102009 028 921
- US-A- 5 577 480

## Beschreibung

### Stand der Technik

Die Erfindung betrifft eine Komponente eines Brennstoffeinspritzsystems, die insbesondere als Brennstoffeinspritzventil ausgestaltet sein kann. Speziell betrifft die Erfindung das Gebiet der Injektoren für Brennstoffeinspritzanlagen von luftverdichtenden, selbstzündenden Brennkraftmaschinen.

Aus der DE 103 36 327 A1 ist ein Injektor für Kraftstoff-Einspritzsysteme von Brennkraftmaschinen, insbesondere von direkteinspritzenden Dieselmotoren, bekannt. Der bekannte Injektor besitzt einen in einem Injektorkörper angeordneten Piezoaktor, der einerseits mit dem Injektorkörper und andererseits mit einem hülsenartigen Übersetzerkolben in Anlage gehalten wird. Der Injektorkörper weist eine durchgehende, auf dem überwiegenden Teil ihrer Längserstreckung zylindrische Ausnehmung auf. An ihrem oberen Ende besitzt diese Ausnehmung zunächst einen sich konisch verjüngenden Abschnitt, der in einen rechtwinklig abgebogenen, schließlich nach außen mündenden Abschnitt übergeht. Der obere, abgewinkelte Abschnitt der Ausnehmung fungiert als Kabeldurchführung für die Stromversorgung des Piezoaktors. Am oberen Ende des Injektors ist eine Kraftstoffzuführung, zum Beispiel ein Hochdruckanschluss eines Common-Rail-Systems, vorgesehen. An das untere Ende des Injektorkörpers schließt sich ein Düsenkörper an, der mittels einer Überwurfmutter an dem Injektorkörper befestigt ist.

Um die elektrische Zuleitung zu dem Piezoaktor zu realisieren, ist es denkbar, dass an dem Injektorkörper eine Umspritzung vorgesehen ist. Ein elektrisches Anschlussstück, insbesondere eine Buchse, kann hierbei in die Umspritzung integriert sein.

Bei der Konstruktion von Umspritzungen von Bauteilen mit unterschiedlichen Wärmeausdehnungskoeffizienten und/oder unterschiedlichem Quellverhalten ergeben sich unter Temperaturbelastung beziehungsweise Feuchteeintrag Spalte zwischen dem Bauteil und der Umspritzung. Dies führt zur Undichtigkeit des Verbunds und ist vor allem bei elektrischen Komponenten kritisch. Speziell kann Feuchtigkeit in das Bauteil, beispielsweise einen Injektorkörper, eindringen.

Aus der DE 10 2009 028 921 A1 ist ein Injektor mit einem Injektorkörper und einem den Injektorkörper zumindest teilweise umgebenden Anschlusskörper bekannt. Hierbei ist ein Verbindungsbereich zwischen dem Anschlusskörper und dem Injektorkörper zumindest bereichsweise mittels einer Dichtmasse/Klebstoff abgedichtet. Der Anschlusskörper besteht aus Kunststoff.

Aus der EP 1 574 702 A1 ist ein Injektor mit einem Injektorgehäuse und einem darin montierten Aktuator bekannt. Der Aktuator weist ein flexibles Dichtmaterial zur Abdichtung gegenüber Brennstoff auf. Für die Montage des Aktuators in das Injektorgehäuse dient ein Dichtung, die bei der Montage zwischen dem Injektorgehäuse und dem Aktuator mit einer Vorspannung beaufschlagt wird, wodurch eine flüssigkeitsdichte Abdichtung zwischen einem den Aktuator umgebenden Brennstoffraum und einer Anschlußbohrung zur elektrischen Kontaktierung des Aktuators gebildet wird.

### Offenbarung der Erfindung

Die erfindungsgemäß Komponente mit den Merkmalen des Anspruchs 1 hat demgegenüber den Vorteil, dass die Dichtheit zwischen dem Gehäuseteil und der Umspritzung verbessert ist. Speziell kann die Dichtheit auch bei ungünstigen Umweltbedingungen, insbesondere Temperatur-, Feuchtigkeit- und Medienbelastungen, wie sie beispielsweise in einem Motorraum eines Kraftfahrzeugs auftreten, gewährleistet werden.

Durch die in den Unteransprüchen aufgeführten Maßnahmen sind vorteilhafte Weiterbildungen der im Anspruch 1 angegebenen Komponente möglich.

In vorteilhafter Weise ist das Dichtelement an einer gemeinsamen Außenseite des Gehäuseteils und der Umspritzung im Bereich der sich an die Außenseite erstreckenden Kontaktfläche an der Außenseite angebracht. Hierbei ist es ferner vorteilhaft, dass das Dichtelement auf die gemeinsame Außenseite des Gehäuseteils und der Umspritzung aufgeklebt ist. Hierdurch kann ein Eindringen von Medien in den Bereich des Kontakts zwischen dem Gehäuseteil und der Umspritzung erzielt werden. Hierdurch kann auch das Eindringen von Feuchtigkeit, beispielsweise Wasserdampf, und auch von Feststoffen, beispielsweise Schmutz- oder Russpartikeln, verhindert werden. Somit kann die Dichtheit am Injektor gewährleistet werden. Im Betrieb kann damit ein elektrischer Kurzschluss, ein Masseschluss oder eine Elektrolyse verhindert werden.

Vorteilhaft ist es auch, dass die sich an die gemeinsame Außenseite erstreckende Kontaktfläche an der Außenseite kreislinienförmig ausgestaltet ist, dass das Dichtelement als kreisringförmiges Dichtelement ausgestaltet ist und dass das Dichtelement die Kontaktfläche an der Außenseite entlang ihrer kreislinienförmigen Ausgestaltung verschließt. Beispielsweise kann das Gehäuseteil eine zylindermantelförmige Außenseite aufweisen, die von der Umspritzung umgeben ist. Die Kontaktfläche zwischen dem Gehäuseteil und der Umspritzung ist dann entsprechend der zylindermantelförmigen Außenfläche zylindermantelförmig ausgestaltet. In Bezug auf die freibleibende, gemeinsame Außenseite der Umspritzung und des Gehäuseteils hat die Kontaktfläche dann eine kreisringförmige Ausgestaltung an dieser Außenseite. Über das Dichtetikett kann mit verhältnismäßig geringem Montageaufwand diese zylindermantelförmige Kontaktfläche gegenüber der Umgebung abgedichtet werden.

Vorteilhaft ist es, dass das Dichtelement als Dichtetikett ausgestaltet ist, das eine Trägerfolie und einen auf einer Seite der Trägerfolie vorgesehenen Klebstoff umfasst. Dieses Dichtetikett kann somit auf einfache Weise auf die Flächen und die Schnittstelle zwischen der Umspritzung und dem Gehäuseteil, insbesondere einem Injektorkörper, aufgebracht werden. Die Trägerfolie und der Klebstoff des Dichtetiketts sind hierbei in Bezug auf die im jeweiligen Anwendungsfall gegebenen Anforderungen, insbesondere Robustheitsanforderungen, ausgewählt. Beispielsweise können diese den Robustheitsanforderungen, wie sie in einem Motorraum erforderlich sind, entsprechen. Hierzu gehören die Beständigkeit gegenüber Medien, beispielsweise Öl und Salzwasser, sowie gegen hohe Temperaturwechsel.

Vorteilhaft ist es daher auch, dass das Dichtetikett als medienbeständiges Dichtetikett ausgebildet ist, wobei die Medienbeständigkeit zumindest eine Brennstoffbeständigkeit umfasst. Zusätzlich oder alternativ ist es vorteilhaft, dass das Dichtetikett als medienbeständiges Dichtetikett ausgebildet ist, wobei die Medienbeständigkeit eine Beständigkeit gegenüber Salzwasser in Verbindung mit Temperaturwechseln umfasst.

Das Gehäuseteil kann in vorteilhafter Weise auf einem Stahl basieren. Speziell ist es vorteilhaft, dass das Gehäuseteil auf einem phosphatiertem Stahl basiert. Die Umspritzung kann in vorteilhafter Weise auf einem Kunststoff basieren. Durch das Dichtetikett kann auch bei unterschiedlichen Werkstoffeigenschaften, beispielsweise in Bezug auf solch einen Stahl und solch einen Kunststoff, eine Dichtigkeit bezüglich der Kontaktfläche zwischen diesen beiden Werkstoffen realisiert werden. Somit kann trotz unterschiedlicher Wärmeausdehnungskoeffizienten und unterschiedlichem Quellverhalten unter Temperaturbelastung ein Feuchteeintrag verhindert werden.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine Komponente eines Brennstoffeinspritzsystems in einer auszugsweisen, schematischen Darstellung entsprechend einem Ausführungsbeispiel der Erfindung;
Fig. 2 die in Fig. 1 dargestellte Komponente aus der mit II bezeichneten Blickrichtung und
Fig. 3 ein Dichtelement der Komponente des Ausführungsbeispiels entsprechend einer möglichen Gestaltung der Erfindung.

### Ausführungsformen der Erfindung

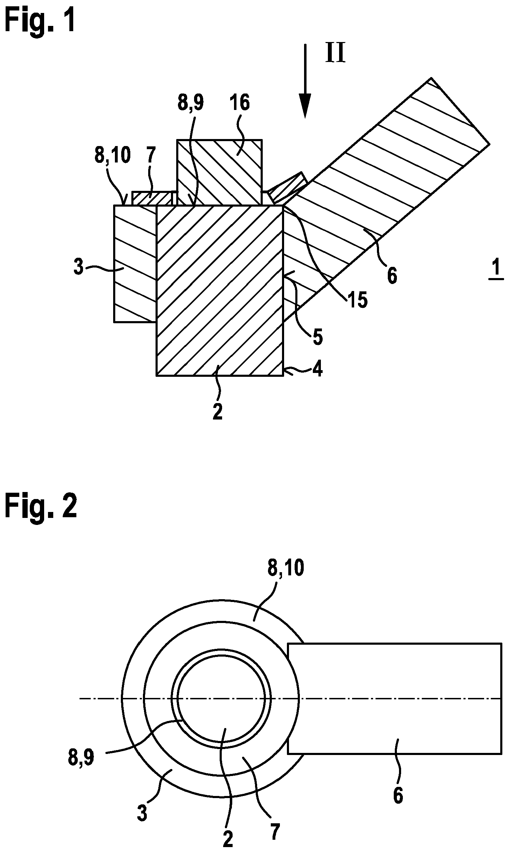

Fig. 1 zeigt eine Komponente 1 eines Brennstoffeinspritzsystems in einer auszugsweisen, schematischen Darstellung entsprechend einem Ausführungsbeispiel der Erfindung. Die Komponente 1 kann insbesondere als Brennstoffeinspritzventil 1 ausgestaltet sein. Speziell kann die Komponente 1 als Teil einer Brennstoffeinspritzanlage in einem Motorraum eines Kraftfahrzeugs angeordnet sein, wo sie ungünstigen Umweltbedingungen ausgesetzt ist. Speziell kann sie Medieneinflüssen durch Öl und Salzwasser sowie Temperaturschwankungen ausgesetzt sein. Die erfindungsgemäße Komponente 1 eignet sich jedoch auch für andere Anwendungsfälle.

Die Komponente 1 weist ein Gehäuseteil 2 und eine Umspritzung 3 auf. Das Gehäuseteil 2 kann beispielsweise eine zylindermantelförmige Außenseite 4 aufweisen, an der die Umspritzung 3 vorgesehen ist. Hierdurch ist an der zylindermantelförmigen Außenseite 4 eine Kontaktfläche 5 zwischen dem Gehäuseteil 2 und der Umspritzung 3 gebildet, die in diesem Fall ebenfalls zylindermantelförmig ausgestaltet sein kann.

In die Umspritzung 3 ist in diesem Ausführungsbeispiel ein elektrischer Anschluss 6 integriert, über den mittels eines (nicht dargestellten) Steckers eine elektrische Zuleitung für einen Aktor der Komponente 1 oder dergleichen kontaktiert werden kann.

Im Bereich der Kontaktfläche 5 können Bohrungen, Öffnungen oder dergleichen des Gehäuseteils 2 vorgesehen sein, die beispielsweise in einen Innenraum des Gehäuseteils 2 führen. Auch aus diesem Grund ist eine zuverlässige Abdichtung der Kontaktfläche 5 gegenüber der Umgebung erforderlich.

Das Gehäuseteil 2 ist in Bezug auf die mechanischen Anforderungen, insbesondere einen Druck des zugeführten Brennstoffs, und eine über die Lebensdauer erforderliche Verschleißbeständigkeit aus einem Stahl gebildet. Speziell kann ein phosphatierter Stahl zum Einsatz kommen. Die Umspritzung 3 ist hingegen aus einem Kunststoff gebildet, um ein Anspritzen an das Gehäuseteil 2 zu ermöglichen. Im Bereich der Kontaktfläche 5 liegen somit Werkstoffe aneinander an, die sich erheblich voneinander unterscheiden. Beispielsweise haben diese Werkstoffe unterschiedliche Wärmeausdehnungskoeffizienten und ein unterschiedliches Quellverhalten bei der Einwirkung von Medien. Unter Temperaturbelastung und Feuchteeintrag besteht somit das Problem, dass sich Spalte an der Kontaktfläche 5 bilden. Dies führt zu Undichtigkeit des Verbundes und kann zum Eindringen von Medien, insbesondere Wasser, Salzwasser und Öl, führen. In der Folge kann es zu einem elektrischen Kurzschluss, einem Masseschluss oder auch dem Auftreten einer elektrolytischen Reaktion (Elektrolyse) kommen.

Um die Kontaktfläche 5 zuverlässig gegenüber der Umgebung abzudichten und somit ein Eindringen von Medien in den Bereich der Kontaktfläche 5 zuverlässig zu verhindern, weist die Komponente 1 zumindest ein Dichtelement auf. An dem Gehäuseteil 2 und der Umspritzung 3 ist eine gemeinsame Außenseite 8 gebildet. Ein Teil 9 der gemeinsamen Außenseite 8 befindet sich hierbei an dem Gehäuseteil 2, während ein anderer Teil 10 der gemeinsamen Außenseite 8 an der Umspritzung 3 ausgestaltet ist. Die gemeinsame Außenseite 8 ist hierbei zumindest teilweise eben ausgestaltet.

Die Kontaktfläche 5 zwischen dem Gehäuseteil 2 und der Umspritzung 3 erstreckt sich bis an die gemeinsame Außenseite 8, wo sich eine geschlossene Kurve 15 an der Außenseite 8 ergibt. Die geschlossene Kurve 15 ist in diesem Ausführungsbeispiel kreislinienförmig ausgestaltet. Somit ist die sich an die gemeinsame Außenseite 8 erstreckende Kontaktfläche 5 an der Außenseite 8 in diesem Ausführungsbeispiel kreislinienförmig ausgestaltet, nämlich entlang der kreislinienförmigen, geschlossenen Kurve 15. Das Dichtelement 7 ist im Bereich der geschlossenen Kurve 15 auf die gemeinsame Außenseite 8 aufgebracht. Das Aufbringen erfolgt hierbei durch Aufkleben des Dichtelements 7 auf die gemeinsame Außenseite 8 des Gehäuseteils 2 und der Umspritzung 3. Somit ist die Kontaktfläche 5 zuverlässig gegenüber der Umgebung abgedichtet. Das Dichtelement 7 verschließt die Kontaktfläche 5 hierbei an der geschlossenen Kurve 15.

Fig. 2 zeigt die in Fig. 1 dargestellte Komponente 1 aus der mit II bezeichneten Blickrichtung. Das Dichtelement 7 ist im Bereich der kreislinienförmigen Kurve 15 (Fig. 1) auf die gemeinsame Außenseite 8 geklebt. Das Dichtelement 7 ist hierbei kreisringförmig ausgestaltet. Dadurch umschließt das Dichtelement 7 einen zylinderförmigen Endabschnitt 16 des Gehäuseteils 2. Das Dichtelement 7 kann allerdings auch andere Geometrien aufweisen.

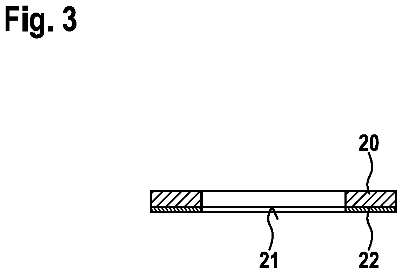

Fig. 3 zeigt das Dichtelement 7 im Ausgangszustand vor dem Anbringen an der Außenseite 8 in einer schematischen Schnittdarstellung. Das Dichtelement 7 ist als Dichtetikett 7 ausgestaltet, das eine Trägerfolie 20 und einen auf einer Seite 21 der Trägerfolie 20 vorgesehenen Klebstoff 22 umfasst. Das Dichtetikett 7 ist als medienbeständiges Dichtetikett 7 ausgebildet. Hierbei wird eine Medienbeständigkeit gegenüber Brennstoff und Salzwasser in Verbindung mit Temperaturwechseln erzielt.

Die Temperaturbeständigkeit des Dichtelements 7 kann beispielsweise für einen Bereich von etwa -40 °C bis etwa 140 °C vorgegeben sein.

Die Medienbeständigkeit kann in Bezug auf den jeweiligen Anwendungsfall festgelegt werden.

In Bezug auf das Einwirken von Brennstoffdämpfen (Kraftstoffdämpfen) kann die Komponente 1 mit dem Dichtelement 7 im Abstand von beispielsweise 20 cm zur Brennstoffoberfläche in einen Prüfbehälter eingebracht werden. Im Rahmen eines Prüfzykluses von 24 Stunden kann ein Aufheizen in drei Stunden, ausgehend von Raumtemperatur bis auf etwa 70 °C erfolgen. Dann wird diese Temperatur etwa fünf Stunden bei etwa 70 °C gehalten. Anschließend kann innerhalb von 16 Stunden ein Abkühlen, ausgehend von 70 °C bis auf Raumtemperatur erfolgen. Speziell für den Einsatz der Komponente im Motorraum werden vorzugsweise zwei oder mehr solcher Prüfzyklen durchgeführt.

Eine weitere Prüfmethode zur Erfassung der Dichtigkeit kann in einer Reinigung mit Brennstoff bestehen. Hierbei wird die zu prüfende Oberfläche im Bereich des Dichtelements 7 und der gemeinsamen Außenseite 8 mit einem mit Prüfflüssigkeit getränkten Maschinenputztuch unter leichtem Druck abgerieben. Die Anzahl der Reibvorgänge kann beispielsweise 10 betragen.

Eine weitere Prüfmethode besteht in der Benetzung mit einem Brennstoff. Hierbei kann das Benetzen durch Bepinseln, Übergießen oder durch Tauchen erfolgen. Ein Prüfzyklus kann hierbei etwa 24 Stunden dauern. Zunächst kann für 5 Sekunden ein Benetzen mit der Prüfflüssigkeit bei Raumtemperatur erfolgen. Innerhalb von 24 Stunden erfolgt dann ein Abdampfen bei Raumtemperatur oder gegebenenfalls auch bei einer höheren Temperatur. Speziell für den Einsatz im Motorraum werden vorzugsweise zwei oder mehr Prüfzyklen durchgeführt.

Eine Wasserschutzprüfung kann in entsprechender Weise erfolgen.

Die Beständigkeit gegenüber Salzwasser in Verbindung mit Temperaturwechseln kann durch eine Luft-Sole-Prüfmethode erfolgen. Hierbei wird die Komponente 1 abwechselnd in einem Wärmeofen erhitzt und dann in Salzwasser mit einer Temperatur von beispielsweise 0 °C getaucht. Dies führt zu starken Temperaturschocks, denen die Komponente 1 und deren Bestandteile ausgesetzt werden.

Bei der Luft-Sole-Prüfmethode kann der Bereich im Wärmeofen auf bis zu 150 °C aufgeheizt werden. Das Kaltbad hat hierbei vorzugsweise 0 °C. Die Verweildauer im Wärmeofen kann in Abhängigkeit von der Prüflingsmasse der Komponente 1 hierbei 30 Minuten oder mehr betragen. Die Verweildauer im Kaltbad kann in Abhängigkeit von der Prüflingsmasse fünf oder mehr Minuten betragen. Die Umlagerungszeit kann beispielsweise fünf Sekunden betragen. Zur Überprüfung der Dichtheit können beispielsweise zehn Zyklen gewählt werden.

Somit kann in Bezug auf den jeweiligen Anwendungsfall ein geeignetes Dichtelement 7 zum Einsatz kommen.

Die Erfindung ist nicht auf die beschriebenen Ausführungsbeispiele beschränkt.

## Patentansprüche

1. Komponente (1) eines Brennstoffeinspritzsystems, insbesondere Brennstoffeinspritzventil, mit einem Gehäuseteil (2) und einer Umspritzung (3), die zumindest teilweise an dem Gehäuseteil (2) vorgesehen ist, wobei zumindest ein Dichtelement (7) vorgesehen ist,
**dadurch gekennzeichnet,**
**dass** das Dichtelement (7) eine zwischen dem Gehäuseteil (2) und der Umspritzung (3) ausgebildete Kontaktfläche (5) gegenüber der Umgebung abdichtet, dass das Dichtelement (7) an einer gemeinsamen Außenseite (8) des Gehäuseteils (2) und der Umspritzung (3) zumindest im Bereich der sich an die Außenseite (8) erstreckenden Kontaktfläche (5) an der Außenseite (8) angebracht ist und dass das Dichtelement (7) auf die gemeinsame Außenseite (8) des Gehäuseteils (2) und der Umspritzung (3) aufgeklebt ist.

2. Komponente nach Anspruch 1,
**dadurch gekennzeichnet,**
**dass** die sich an die gemeinsame Außenseite (8) erstreckende Kontaktfläche (5) an der Außenseite (8) zumindest näherungsweise kreislinienförmig ausgestaltet ist, dass das Dichtelement (7) als zumindest näherungsweise kreisringförmiges Dichtelement (7) ausgestaltet ist und dass das Dichtelement (7) die Kontaktfläche (5) an der Außenseite (8) entlang ihrer kreislinienförmigen Ausgestaltung (15) verschließt.

3. Komponente nach Anspruch 1 oder 2,
**dadurch gekennzeichnet,**
**dass** das Dichtelement (7) als Dichtetikett (7) ausgestaltet ist, das eine Trägerfolie (20) und einen auf einer Seite der Trägerfolie (20) vorgesehenen Klebstoff (22) umfasst.

4. Komponente nach Anspruch 3,
**dadurch gekennzeichnet,**
**dass** das Dichtetikett (7) als medienbeständiges Dichtetikett (7) ausgebildet ist, wobei die Medienbeständigkeit zumindest eine Brennstoffbeständigkeit umfasst.

5. Komponente nach Anspruch 3 oder 4,
**dadurch gekennzeichnet,**
**dass** das Dichtetikett (7) als medienbeständiges Dichtetikett (7) ausgebildet ist, wobei die Medienbeständigkeit zumindest eine Beständigkeit gegenüber Salzwasser in Verbindung mit Temperaturwechseln umfasst.

6. Komponente nach einem der Ansprüche 1 bis 5,
**dadurch gekennzeichnet,**
**dass** das Gehäuseteil (2) auf einem Stahl basiert.

7. Komponente nach Anspruch 6,
**dadurch gekennzeichnet,**
**dass** das Gehäuseteil (2) auf einem phosphatierten Stahl basiert.

8. Komponente nach einem der Ansprüche 1 bis 7,
**dadurch gekennzeichnet,**
**dass** die Umspritzung (3) auf einem Kunststoff basiert.

## Claims

1. Component (1) of a fuel injection system, in particular fuel injection valve, having a housing part (2) and having an injection-moulded encapsulation (3) which is provided at least partially on the housing part (2), wherein at least one sealing element (7) is provided,
**characterized**
**in that** the sealing element (7) seals off a contact surface (5) formed between the housing part (2) and the injection-moulded encapsulation (3) with respect to the surroundings, in that, at a common outer side (8) of the housing part (2) and of the injection-moulded encapsulation (3), the sealing element (7) is applied to the outer side (8) least in the region of the contact surface (5), which extends to the outer side (8), and in that the sealing element (7) is adhesively bonded to the common outer side (8) of the housing part (2) and of the injection-moulded encapsulation (3).

2. Component according to Claim 1,
**characterized**
**in that** the contact surface (5), which extends to the common outer side (8), is of at least approximately circular form at the outer side (8), in that the sealing element (7) is formed as an at least approximately circular sealing element (7), and in that the sealing element (7) closes off the contact surface (5) at the outer side (8) along its circular form (15).

3. Component according to Claim 1 or 2,
**characterized**
**in that** the sealing element (7) is in the form of a sealing label (7) which comprises a carrier foil (20) and an adhesive (22) provided on one side of the carrier foil (20).

4. Component according to Claim 3,
**characterized**
**in that** the sealing label (7) is in the form of a sealing label (7) which is resistant to media, wherein the resistance to media comprises at least a resistance to fuel.

5. Component according to Claim 3 or 4, **characterized in that** the sealing label (7) is in the form of a sealing label (7) which is resistant to media, wherein the resistance to media comprises at least a resistance to saltwater in conjunction with temperature changes.

6. Component according to one of Claims 1 to 5,
**characterized**
**in that** the housing part (2) is based on a steel.

7. Component according to Claim 6,
**characterized**
**in that** the housing part (2) is based on a phosphated steel.

8. Component according to one of Claims 1 to 7,
**characterized**
**in that** the injection-moulded encapsulation (3) is based on a plastic.

## Revendications

1. Composant (1) d'un système d'injection de carburant, en particulier soupape d'injection de carburant, avec une partie de corps (2) et un enrobage (3), qui est prévu au moins partiellement sur la partie de corps (2), dans lequel il est prévu au moins un élément d'étanchéité (7), **caractérisé en ce que** l'élément d'étanchéité (7) assure l'étanchéité d'une face de contact (5) formée entre la partie de corps (2) et l'enrobage (3) par rapport à l'environnement, **en ce que** l'élément d'étanchéité (7) sur un côté extérieur commun (8) de la partie de corps (2) et de l'enrobage (3) est appliqué sur le côté extérieur (8) au moins dans la région de la face de contact (5) s'étendant vers le côté extérieur (8) et **en ce que** l'élément d'étanchéité (7) est collé sur le côté extérieur commun (8) de la partie de corps (2) et de l'enrobage (3).

2. Composant selon la revendication 1, **caractérisé en ce que** la face de contact (5) s'étendant vers le côté extérieur commun (8) est tracée sur le côté extérieur (8) au moins approximativement en forme de ligne circulaire, **en ce que** l'élément d'étanchéité (7) est réalisé en forme d'élément d'étanchéité (7) de forme au moins approximativement annulaire circulaire et **en ce que** l'élément d'étanchéité (7) ferme la face de contact (5) sur le côté extérieur (8) le long de son tracé en forme de ligne circulaire (15).

3. Composant selon la revendication 1 ou 2, **caractérisé en ce que** l'élément d'étanchéité (7) est formé par une étiquette d'étanchéité (7), qui comprend une feuille de support (20) et un adhésif (22) prévu sur un côté de la feuille de support (20).

4. Composant selon la revendication 3, **caractérisé en ce que** l'étiquette d'étanchéité (7) est une étiquette d'étanchéité (7) résistant aux fluides, dans lequel la résistance aux fluides comprend au moins une résistance aux carburants.

5. Composant selon la revendication 3 ou 4, **caractérisé en ce que** l'étiquette d'étanchéité (7) est une étiquette d'étanchéité (7) résistant aux fluides, dans lequel la résistance aux fluides comprend au moins une résistance à l'eau salée en relation avec des changements de température.

6. Composant selon l'une quelconque des revendications 1 à 5, **caractérisé en ce que** la partie de corps (2) est basée sur un acier.

7. Composant selon la revendication 6, **caractérisé en ce que** la partie de corps (2) est basée sur un acier phosphaté.

8. Composant selon l'une quelconque des revendications 1 à 7, **caractérisé en ce que** l'enrobage (3) est basé sur une matière plastique.
